# EUROPEAN PATENT SPECIFICATION

(11) **EP 0 814 670 B1**
(45) Date of publication and mention of the grant of the patent: **08.11.2000**
(21) Application number: 95912154.2
(22) Date of filing: 22.03.1995
(51) Int. Cl.: A23G 3/30, A61K 9/68

(54) **METHOD FOR PRODUCTION OF CHEWING OR BUBBLE GUM AND CHEWING OR BUBBLE GUM**
VERFAHREN ZUR HERSTELLUNG VON KAUGUMMI ODER KNALLKAUGUMMI UND KAUGUMMI ODER KNALLKAUGUMMI
PROCEDE DE FABRICATION DE GOMME A MACHER OU A BULLES, ET DE GOMME A MACHER OU A BULLES

(43) Date of publication of application: 07.01.1998
(73) Proprietor: H.B. Jorgensen ApS, 8260 Viby J (DK)
(72) Inventor: JORGENSEN, Hans, Borge, DK-8260 Viby J (DK)
(74) Representative: Gregersen, Niels Henrik
(86) International application number: DK9500126
(87) International publication number: WO9628982

(56) References cited:
- EP-A- 0 217 109
- US-A- 1 526 039
- US-A- 4 824 681
- US-A- 4 933 190

## Description

The present invention relates to a method for production of chewing or bubble gum and of the type described in the introductory part of claim 1.

There are many different kinds of chewing gums, for instance in plates, small pieces with or without encapsulation, stratified chewing gum (as liquorice allsorts), filled chewing gum with fluid contents, coated chewing gum or extruded chewing gum.

Chewing gummy masses may be found in many variations. From the nature is among others known the following gummy masses: Chicle, Dead Borneo and Pontianac; but most of the gummy masses are produced by rubber, resin and wax. Furthermore there also exist synthetic gummy masses.

Generally it is a fact that all gummy masses only may contain a certain quantity of flavourings containing oil or grease, as supersaturation cause destruction of the gummy mass.

The gummy mass itself is a viscous, hard mass, which normally is mixed with glucose and sugar, and which thereafter are formed in accordance with wishes.

From US-A-5 128 155 it is known in connection with chewing gum to separate a core with flavourings from the gummy mass itself by encapsulating the core with a layer free from gummy mass and thereafter encapsulate the core with a layer of gummy containing sugar mass.

The invention has for its purpose to provide a method for production of an improved chewing or bubble gum with extra strong taste and better durability (taste intensity), which method is characterized in that the second part of the encapsulation is carried out by mixing a pulverized gummy mass being produced by mixing a gummy mass with softener, freezing the mixture and thereafter pulverize it. In a simple manner it is hereby obtained, that the gummy mass may be kept totally separated from for instance the oily or greasy flavourings, which usually decompose the gummy mass, that is that a chewing or bubble gum may be produced with extra strong taste and better durability (taste intensilt), where the flavourings and the gummy mass are not mixed until the chewing.

Furthermore the invention relates to a chewing or bubble gum produced in accordanve with the method according to the invention comprising a flavouring containing core, and which being encapsulated with a gummy mass free layer and a gummy mass containing layer, which chewing or bubble gum is characterized in that the latter gummy mass containing layer is added during encapsulating with a pulverized gummy mass.

Or the chewing or bubble gum according to the invention may comprise a core, which in stead of or as a supplement for said flavourings contains a medicine mass.

The invention is explained in more detail in the following.

A mass of sugar, glucose, gelatine, sugarfree ingredients or the like is produced and the wanted flavourings are added in such a quantity that you will get an "extra strong" taste.

The mass is formed as pellets, pastilles, tablets or the like.

The gummy mass may be softened by adding a suitable quantity of softener for instance in the form of flavourings, whereafter it is frozen and pulverized (as for instance milled coffee).

The pieces in question are pre-encapsulated and thereafter the encapsulation is completed in usual manner, but by adding pulverized gummy mass during the mixing, whereafter one have a unique chewing gum differing totally from known types of chewing gum, as the gummy mass is placed outside, that is that it "the wrong side is turned out".

A mixture containing gummy mass, glucose, sugar and sorbitol may also be added to the encapsulation, which mixture is pulverized at half so low freezing degrees as that for the gummy mass alone. In the same manner waste from the production of chewing gum may also be chrushed and recycled as it here is a question of total separation of the supersaturated core and the encapsulation with pulverized recycling gummy mass.

During the encapsulation liguid is added; this liquid may also contain gummy mass. For instance warmed up glucose is added to a suitable quantity pulverized gummy mass, which is thinned with water during stirring. In any case the gummy mass may be contained in the encapsulation.

In principle it is important, that the gummy mass may be kept totally separated from for instance the oily or greasy flavourings, which elsewise would decompose the gummy mass, that is that a chewing or bubble gum with extra strong taste and better durability (taste inensity) may be produced, where the flavourings and the gummy mass are not mixed until the chewing.

## Claims

1. A method for production of a chewing or bubble gum with a flavouring containing-core encapsulated with a layer free from gummy mass followed by a gummy mass containing layer, ***characterized*** in that the second part of the encapsulation is carried out by adding a pulverized gummy mass being produced by mixing a gummy mass with softener, freezing the mixture and thereafter pulverize it.

2. Chewing or bubble gum comprising a flavouring containing core, and which being encapsulated with a gummy mass free layer and a gummy mass containing layer, ***characterized*** in that the latter gummy mass containing layer is added by encapsulating with a pulverized gummy mass.

3. Chewing or bubble gum according to claim 2, ***characterized*** in that said core in stead of or as a supplement for said flavourings contains a medicine mass.

## Patentansprüche

1. Verfahren zur Herstellung eines Kaugummis oder eines Bubble Gums mit einem geschmackstoffhaltigen Kern, der mit einer gummimassefreien Schicht nachfolgend mit einer gummimassehaltigen Schicht dragiert ist, dadurch **gekennzeichnet**, daß der zweite Teil des Dragierens durch Beimengung einer pulverisierten Gummimasse vorgenommen wird, die durch Mischung einer Gummimasse mit einem Weichmacher, durch Einfrieren der Mischung und nachfolgend durch ihre Pulverisierung hergestellt wird.

2. Kaugummi oder Bubble Gum umfassend einen geschmackstoffhaltigen Kern, und der mit einer gumminiassefreien Schicht und einer gummimassehaltigen Schicht dragiert wird, dadurch **gekennzeichnet**, daß die letzterwähnte gummimassehaltige Schicht durch Dragieren mit einer pulverisierten Gummimasse aufgetragen wird.

3. Kaugummi oder Bubble Gum nach Anspruch 2, dadurch **gekennzeichnet**, daß der genannte Kern statt oder als Ergänzung der genannten Geschmackstoffe eine Medizinmasse enthält.

## Revendications

1. Procédé de fabrication de chewing gum ou de bubble gum avec un coeur comprenant un aromatisant et dragéifié d'une couche exempte de masse gommeuse suivi d'une couche comprenant une masse gommeuse, **caractérisé** en ce que la deuxième partie de la dragéification se fait en ajoutant une masse gommeuse pulvérisée étant produit en mélangeant une masse gommeuse avec un adoucissant, en la congelant et ensuite en la pulvérisant.

2. Chewing ou bubble gum comprenant un coeur comprenant un aromatisant, et lequel étant dragéifié d'une couche exempte de masse gommeuse et d'une couche de masse gommeuse, **caractérisé** en ce que ladite dernière couche de masse gommeuse est appliquée en dragéifiant avec une masse gommeuse pulvérisée.

3. Chewing ou bubble gum selon revendication 2, **caractérisé** en ce que ledit coeur au lieu desdits ou en supplément auxdits aromatisants comprend une masse de médecine.
